(19) Europäisches Patentamt / European Patent Office / Office européen des brevets

(11) **EP 4 492 285 A1**

(12) **EUROPEAN PATENT APPLICATION**

(43) Date of publication:
**15.01.2025 Bulletin 2025/03**

(21) Application number: **23184415.0**

(22) Date of filing: **10.07.2023**

(51) International Patent Classification (IPC):
**G06N 3/045** (2023.01)    **G06N 3/084** (2023.01)
**G06V 10/82** (2022.01)    **G06N 3/0475** (2023.01)

(52) Cooperative Patent Classification (CPC):
**G06N 3/045; G06N 3/0475; G06N 3/084;
G06V 10/82**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Robert Bosch GmbH
70442 Stuttgart (DE)**

(72) Inventors:
• **Khoreva, Anna
70197 Stuttgart (DE)**
• **Li, Yumeng
72070 Tuebingen (DE)**
• **Zhang, Dan
71229 Leonberg (DE)**

Remarks:
Amended claims in accordance with Rule 137(2) EPC.

(54) **DEVICE AND METHOD FOR GENERATING IMAGES**

(57) Computer-implemented method for generating an image ($x_i$), wherein the image ($x_i$) is generated by a neural network (70) and wherein the method comprises the steps of:
• Providing a randomly drawn image ($z_t$) or a representation ($z_{t-1}$, $z_1$) of the randomly drawn image ($z_t$) as input of a sequence of layers ($s_t$, $s_{t-1}$, $s_1$) of the neural network (70), wherein the sequence of layers comprises at least one cross-attention layer ($CA_t$, $CA_{t-1}$, $CA_1$);
• Providing a first input to the cross-attention layer ($CA_t$, $CA_{t-1}$, $CA_1$), wherein the first input is either a representation of the input of the sequence of layers determined by layers of the sequence of layers preceding the cross-attention layer or wherein the first input is the input to the sequence of layers and providing a text embedding ($\tau_\theta$) characterizing a description of the image ($x_i$) to be generated as a second input to the cross-attention layer ($CA_t$, $CA_{t-1}$, $CA_1$);

• Determining, by the cross-attention layer, an attention map based on the first input and the second input;
• Optimizing the input provided to the sequence of layers ($s_t$, $s_{t-1}$, $s_1$) based on a loss function thereby determining an optimized input ($o_t$, $o_{t-1}$, $o_1$), wherein the method is characterized in that the loss function comprises a term characterizing a negative total variation of the attention map;
• Determining an output of the sequence of layers ($s_t$, $s_{t-1}$, $s_1$) based on the optimized input ($o_t$, $o_{t-1}$, $o_1$);
• Determining the image ($x_i$) based on the determined output of the sequence of layers ($s_t$, $s_{t-1}$, $s_1$).

Fig. 1

**Description**

Technical field

The invention concerns a method for generating images, a method for training or testing a machine learning system, a method for determining a control signal, a training system, a control system, a computer program and a machine-readable storage medium.

Prior art

Chefer et al. "Attend-and-Excite: Attention-Based Semantic Guidance for Text-to-Image Diffusion Models", January 31st, 2023, available at https://arxiv.org/abs/2301.13826 discloses how to intervene in the generative process of a stable diffusion model on the fly during inference time to improve the faithfulness of the generated images.

Technical background

The need for creating images with a specific content is a recurring sub-task in many different applications. Especially when training or testing machine learning systems configured for image analysis, it is often times not feasible to take a picture of a desired scene. For example, when testing an image classification system for a robot, arranging a wide variety of critical scenes for testing the robot in critical scenarios may not be possible. Likewise, when training an image classification system, the required variety of content in the training images may be hard to achieve by recording images in the real-world.

Text-to-image generative models have a particular advantage in these situations. Text-to-image generative models have the ability to generate diverse and creative images guided by a target text prompt, also known as text description. Current text-to-image models may, however, fail in generating images that fully convey the semantics in a given text prompt. Specifically, the inventors identified three areas, in which text-to-image models are prone for error. First, the generated images do not necessarily include all objects that are described in the prompt. For instance, when the prompt is "a cat and a dog", only the cat is shown in some images and the dog is neglected. Second, the attribute of an object described by a subject in the prompt may (partially) be leaked to another object depicted in the generated image or wrongly assigned. When the input prompt is "a blue cat and a red suitcase", the blue color may leak to the suitcase as well and the generated image may depict a blue suitcase. Third, the model may not follow the spatial relations such as left/right/above/below. For instance, given the prompt "a dog to the right of a cat", the model may generate a dog on the left.

All these problems may lead to generating images that do not resemble the content of the textual description of what should have been generated, leading to an inaccurate evaluation of a machine learning system when used during testing and an inferior performance of the machine learning system when used during training.

The inventors found that, advantageously, particularly optimizing an intermediate representations determined during the generation of an image using a generative model is beneficial in alleviating the aforementioned shortcomings and allows for generating images that match the desired content provided by the text description more faithfully.

Disclosure of the invention

In a first aspect, the invention concerns a computer-implemented method for generating an image, wherein the image is generated by a neural network and wherein the method comprises the steps of:

- Providing a randomly drawn image or a representation of the randomly drawn image as input of a sequence of layers of the neural network, wherein the sequence of layers comprises at least one cross-attention layer;
- Providing a first input to the cross-attention layer, wherein the first input is either a representation of the input of the sequence of layers determined by layers of the sequence of layers preceding the cross-attention layer or wherein the first input is the input to the sequence of layers and providing a text embedding characterizing a description of the image to be generated as a second input to the cross-attention layer;
- Determining, by the cross-attention layer, an attention map based on the first input and the second input;
- Optimizing the input provided to the sequence of layers based on a loss function thereby determining an optimized input, wherein the method is characterized in that the loss function comprises a term characterizing a negative total variation of the attention map;
- Determining an output of the sequence of layers based on the optimized input;
- Determining the image based on the determined output of the sequence of layers.

The method may especially be understood as a method for generating images for training and/or testing an image classification system and/or image regression system.

The term cross-attention layer may especially be understood as a layer implementing the cross-attention mechanism. The cross-attention layer may be understood as injecting additional information into the image generation process, which can be used for guiding the content of the generated image.

The cross-attention layer is part of a sequence of layers. Preferably, this sequence of layers may be characterized by being in the form of an individual block of layers of the neural network, e.g., a block in the backward diffusion process if the neural network is a diffusion model (or only the backward part of the diffusion model).

The cross-attention layer receives a first input that may either be the randomly drawn image if the cross-attention layer is a first layer of the neural network or may be a representation obtained by forwarding the randomly drawn image through layers of the neural network preceding the cross-attention layer. The cross-attention-layer further receives the text embedding as a second input. The first input and second input can each be understood as sequences. The first input may especially comprise a sequence of patches of pixels of the randomly generated image (in case the layer is a first layer of the neural network) or embeddings for the respective patches. Preferably, the cross-attention layer determines a key matrix and a value matrix from the text embedding and a query matrix from the second inputs. Based on these matrices, the cross-attention layer determines an attention map, which can be understood as assigning a relevance of an element of the text embedding to the respective patches.

The text embedding characterizes a description of the image to be generated. The description preferably comprises words describing the desired content of the image. The text embedding may be determined by a language model that maps the description to the embedding, e.g., by using the text encoder of a CLIP model. The resulting text embedding is hence preferably a sequence of embeddings for each word or token in the description, possibly padded by embeddings of control tokens as is common for modern language models. In other words, an attention map may be understood as being linked to a word or token of the text description by means of being determined for a specific element of the text embedding, wherein the text embedding is determined for the word or token. This way, there exists a one-to-one relationship of respective words of the description to attention maps determined by the cross-attention layer. In particular, the attention map may assign values characterizing probabilities to each patch of the randomly drawn image, wherein a value indicates the importance or relevance of the word corresponding to the attention map for a distinct patch.

The effect of optimizing the loss function is an increased total variation of the attention map (minimizing the negative total variation may be understood as maximizing the total variation, they optimization step may hence alternatively maximize the positive total variation). The inventors found that this leads to decreased smoothness of the attention map with respect to the subjects comprised in the description of the image to be generated. Advantageously, optimizing the input to the sequence of layers leads to an improved semantic guidance of the generated image. In other words, the generated image matches the semantic content of the description more faithfully, in particular with respect to the occurrence of objects. This is due to the fact that the maximization of the total variation of the attention map leads to a decreased smoothness of the attention map. This results in a more diverse and faithful image synthesis that is capable of generating multiple instances of a given object. In other words, the image synthesis (or image generation) is improved.

After optimizing the input of the sequence of layers, the optimized input may then be used as input to the sequence of layers again to determine the output of the sequence of layers. The cross-attention layer may be preceded by one or multiple other layers of the sequence of layers, i.e., the first input may be determined by forwarding the input to the sequence of layers through the preceding layers. Likewise, the cross-attention layer may be succeeded by a one or multiple layers, wherein the output of the sequence may then be determined by forwarding the output of the cross-attention layer through the other layers.

Determining the image based on the determined output of the sequence of layers may be understood as forwarding the output of the sequence of layers through one or multiple other layers of the neural network, wherein a last layer of these other layers then provides the generated image as output. For example, when using a stable diffusion model as neural network, the output may be forwarded through one or multiple other layers, wherein an output of this one or multiple other layers is then provided to a decoder to determine the generated image.

In other words, determining the image based on the determined output of the sequence of layers may be understood as the output serving as input to other layers, which in turn determine the generated image as output.

A subject may especially be understood to be a noun that characterizes one or multiple objects that shall be present (or missing) in the generated image.

The term "text embedding" may be understood as a vector representation of a text description, which is typically generated using a pre-trained language model, such as BERT or GPT. In particular, the text embedding may be a sequence of vectorial representations, comprising a representation for each word or token in the text description.

The term "attention map" may be understood as a map of the regions of the image to be generated that are most relevant to the text description, as determined by the cross-attention layer. An attention map may especially be understood as corresponding to a word or token from the word embedding, wherein the attention map is characterized or given by a matrix comprising probability values for the respective word or token for patch positions along a width and height dimension of the matrix. As the text may be characterized by the text embedding, the attention map may also be understood as storing probabilities along the width and height dimension with respect to the text embeddings.

The term "negative total variation" may be understood as a measure of the variation of an attention map. In particular, it may be understood as a maximum absolute difference between neighboring elements in an attention map multiplied by -1.

An attention map may also be understood as a three-dimensional tensor storing a plurality of individual attention maps for each word or token.

Preferably, the text embedding comprises embeddings for a plurality of subjects comprised in the description and an attention map is determined for each subject of the plurality of subjects by the cross-attention layer and a negative total variation is determined for each attention map corresponding to a subject from the plurality of subjects and wherein the first term characterizes a minimal negative total variation among the determined negative total variations.

This preferred embodiment describes a specific realization of the first term used in the loss function. In particular, an attention map may be determined for each subject of the plurality of subjects individually, wherein a minimal negative total variation of these determined attention maps is then used as result for evaluating the first term.

The first term may especially be characterized by the formula:

$$\mathcal{L}_{TV} = \min_{s \in S} - \sum_{i,j} |A_t[i+1, j, s] - A_t[i, j, s]| + |A_t[i, j+1, s] - A_t[i, j, s]|,$$

wherein $A_t$ is the attention map and the expression $A_t[i,j,s]$ characterizes the attention map at position $i,j$ for the embedding $s$ of a set of subjects S comprised by the text description.

Preferably, the neural network comprises a plurality of sequence of layers and thereby a plurality of cross-attention layers as described above. For each of these sequences of layers, an input may be optimized with respect to the loss function and an input received from the randomly drawn image (if the sequence of layers is a first sequence of layers in the neural network)

Preferably, the neural network is a latent diffusion model, such as a stable diffusion model, or a normalizing flow.

The authors found that advantageously, the image generation is even more accurate when using a latent diffusion model such as a stable diffusion model.

Preferably, optimizing the input provided to the sequence of layers based on the loss function is achieved by using a gradient descent method.

The inventors found that a gradient descent-based method leads to the quickest convergence time and hence reduces the computational costs for executing the method.

Preferably, the text embedding comprises an embedding for a subject comprised by the description and an embedding for an attribute comprised by the description and describing the subject and wherein the method further comprises the steps of:

- Determining, by the cross-attention layer, a first attention map for the attribute and a second attention map for the subject;
- Optimizing the input provided to the sequence of layers based on the loss function wherein the loss function comprises a second term, wherein the second term characterizes a difference between the first attention map and the second attention map.

Advantageously, the term encourages better alignment between the subject and its attribute in the generated image. In other words, if the attribute has a visual manifestation, this manifestation is assigned better to the subject qualified by the attribute. For example, if the text description comprises the expression "a blue bench" the neural network generates an image that depicts a blue-colored bench.

The second term hence leads to an even better generation of the image, i.e., the generated image matches the desired text description even more faithfully.

The definition, which attribute connects to which subject may be supplied from an external source, e.g., form a user of the neural network. Alternatively, it is also possible to use a part-of-speech tagging method for determining the connection between attributes and subjects in the text description automatically.

The subjects involved in the second term may also be subjects that are already involved in the first term. Alternatively, it may be other subjects.

The difference may be determined by any matrix norm. Preferably, the difference is a Jensen-Shannon divergence. For determining the Jensen-Shannon divergence, all elements of the respective matrices are preferably used as empirical distribution.

Preferably, the text description comprises a spatial relation connecting a first subject and a second subject of the text description and wherein the method further comprises the steps of:

- Determining, by the cross-attention layer, a third attention map corresponding to the first subject and a fourth attention map corresponding to the second subject;
- Determining a first index corresponding to a position in the third attention map that has a largest value within the third attention map;
- Determining a second index corresponding to a position in the fourth attention map that has a largest value within the fourth attention map;
- Optimizing the input provided to the sequence of layers $(s_t, s_{t-1}, s_1)$ based on the loss function, wherein the loss function a third term characterizing a difference of the first index and the second index wherein whether the first index is subtracted from the second index or the second index is subtracted from the first index is determined based on the spatial relation.

Advantageously, the third term leads to an even greater improvement in the quality of the generated image as the spatial location of objects in the image is encouraged to consider the spatial relation as provided in the text description.

The term "spatial relation" may be understood as referring to the relative position of two objects in the image, as described in the text description, e.g., the relative position of objects to be generated.

The spatial relation may especially be any one from the list "left of", "right of", "below", or "above". In the method, the first index may be determined by determined a largest value of the attention map corresponding to the first subject, and using a position of the largest value along the height and/or width dimension of the attention map as first index. The second index may be determined by determined a largest value of the attention map corresponding to the second subject, and using a position of the largest value along the height and/or width dimension of the attention map as second index. The third term may be characterized by the formula:

$$\mathcal{L}_{spatial} = \begin{cases} x_1 - x_2, & \text{if } s_1 \text{ is to the left of } s_2 \\ x_2 - x_1, & \text{if } s_1 \text{ is to the right of } s_2 \\ y_1 - y_2, & \text{if } s_1 \text{ is below } s_2 \\ y_2 - y_1, & \text{if } s_1 \text{ is above } s_2 \end{cases},$$

wherein $x_1$ is a first index along a width dimension of the attention map.

The first, second, and third loss term may be used in any combination in the loss function, e.g., all three terms, or only the first and second, first and third, or only the first alone.

Some or all of the preferred embodiments of the first aspect as described above may be combined to form further embodiments.

In another aspect, the invention relates to a computer-implemented method for training or testing an image classification or image regression system. The method comprises generating an image using the method of the first aspect, and training or testing the image classification system and/or image regression system using the generated image.

The image classification system and/or image regression system may especially be understood as a model from the field of machine learning which predicts a class depicted on an image (image classification) and/or determines a real value based on the image (image regression). Certain models in the field of machine learning perform both classification and regression, e.g., object detection models.

Image classification may be understood as the process of categorizing an image into one of several predefined classes or categories. Image-based object detection or semantic segmentation may be understood as specific forms of image classification. Image regression refers to the process of predicting a continuous value associated with an image, such as the age or height of a person in the image. Training involves using a set of training images to optimize the model parameters, while testing involves evaluating the performance of the model on a set of test images.

In the context of this aspect, the generated image can be used as a training or testing example for an image classification or image regression system. By using the generated image, the system can learn to classify or regress the image based on its content or can be evaluated on its ability to generalize to new images.

Advantageously, the authors found that the better content of the generated images leads to an improved training dataset and/or improved test dataset of the image classification or image regression system. This way, the image classification or image regression system may achieve a better performance (when using the generated image during training) or the performance (i.e., generalization capabilities) of the image classification or image regression system may be determined more accurately (when using the generated image during testing).

The generated image may especially be annotated by, e.g., a human annotator or an automatic labelling method to serve as training data in a supervised training of the image classification or image regression system. Alternatively, the text description may already serve as annotation (e.g., "a photo of a dog" can be used to extract the label "dog" as desired class label for the generated image).

In another aspect, the invention concerns a computer implemented method for determining a control signal of an actuator and/or a display based on an output of a neural network, wherein the neural network has been trained with the training method as described above.

Advantageously, the method is capable of determining a better control signal as the machine learning system achieves a better performance due to the improved training dataset used in training the machine learning system.

The expression "wherein the neural network has been trained with the training method as described above" may be understood as the method being provided a neural network that has been trained with the training method. Alternatively, it may also be understood as the method for determining the control signal comprising the method for training the image classification system and/or image regression system.

All or some of the described preferred embodiments of the respective methods may be combined.

Embodiments of the invention will be discussed with reference to the following figures in more detail. The figures show:

Figure 1    a method for generating an image;

Figure 2    a training system for training an image classification system and/or image regression system;

Figure 3    a control system comprising a machine learning system controlling an actuator in its environment using the image classification system and/or image regression system;

Figure 4    the control system controlling an at least partially autonomous robot;

Figure 5    the control system controlling a manufacturing machine;

Figure 6    the control system controlling an imaging system.

Description of the embodiments

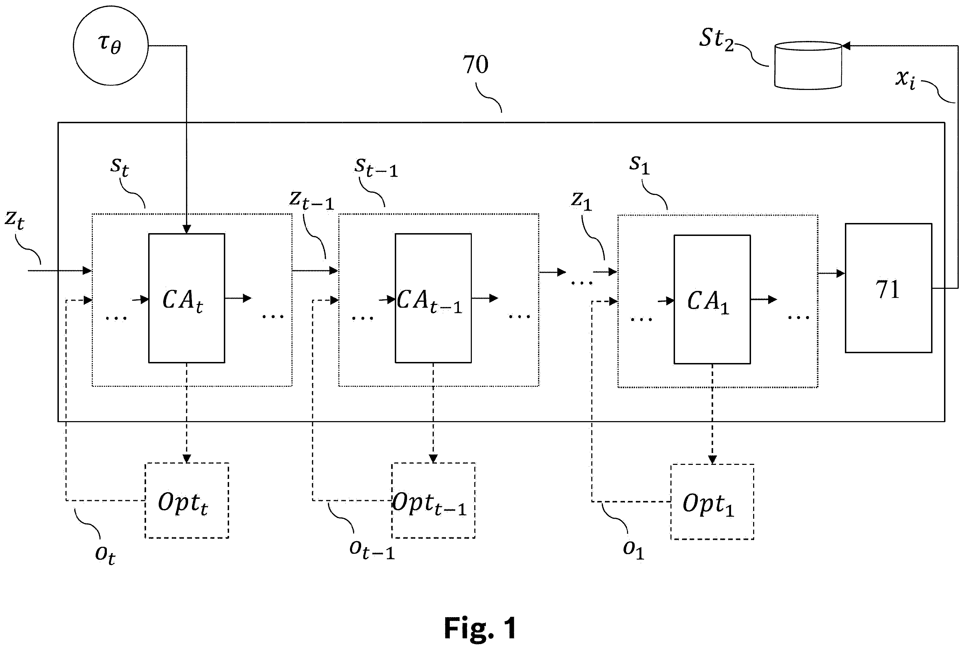

Figure 1 shows a method for generating an image ($x_i$) by means of a neural network (70). The neural network (70) is preferably a generative part of a stable diffusion model. The neural network (70) is provided a randomly sampled image ($z_t$) or a randomly sampled vector as input. In addition, a text embedding ($\tau_\theta$) is provided, e.g., from a text embedder as is common for stable diffusion models. The text embedding ($\tau_\theta$) is preferably of the form of a sequence of vectors, each vector characterizing a token or word from a text description of the image ($x_i$) to be generated. Therefore, there preferably exist a one-to-one relationship between vectors in the sequence of text embeddings ($\tau_\theta$) and the words or tokens in the text description.

The neural network (70) comprises at least one cross-attention layer ($CA_t$, $CA_{t-1}$, $CA_1$), preferably a plurality of cross-attention layers ($CA_t$, $CA_{t-1}$, $CA_1$). Between the cross-attention layers ($CA_t$, $CA_{t-1}$, $CA_1$) there preferably are other layers performing computations. Furthermore, the cross-attention layers ($CA_t$, $CA_{t-1}$, $CA_1$) are preferably each positioned inside a sequence of layers ($s_t$, $s_{t-1}$, $s_1$), which may be understood as sub-networks of the neural network (70). For example, when the neural network (70) is a stable diffusion model, the cross-attention layers ($CA_t$, $CA_{t-1}$, $CA_1$) may be placed inside the transformer blocks. Each block may be understood as a sequence of layers ($s_t$, $s_{t-1}$, $s_1$) with the entire neural network (70) also characterizing a sequence of layer.

In the following, functionality of the method will be described with respect to a first cross-attention layer ($CA_t$) and then be generalized to embodiments of the neural network (70) comprising multiple cross-attention layers ($CA_{t-1}$, $CA_1$).

The sequence of layers ($s_t$) comprising the first cross-attention layer ($CA_t$) may start with the cross-attention layer ($CA_t$). Alternatively, the cross-attention layer ($CA_t$) may also be positioned between layers of the sequence of layers ($s_t$) or at the end of the sequence of layers ($s_t$). Irrespective of the placement, the cross-attention layer ($CA_t$) receives the randomly drawn image ($z_t$) or an intermediate representation (not shown) of the randomly drawn image ($z_t$) based on processing the randomly drawn image ($z_t$) by one or multiple layers preceding the cross-attention layer ($CA_t$). For this, the randomly drawn image ($z_t$) or the intermediate representation is preferably in the form of a sequence of vectors.

In addition, the cross-attention layer ($CA_t$) is a text embedding ($\tau_\theta$), which may be understood as an embedding of a text description of the image ($x_i$).

The input ($z_t$) to the cross-attention layer ($CA_t$) is optimized to determine an optimized input ($o_t$). The optimized input ($o_t$) is determined by an optimization procedure ($Opt_t$). The optimization procedure ($Opt_t$) determines the optimized input ($o_t$) based on a loss function that is optimized by the optimization procedure ($Opt_t$). In other words, the optimized input ($o_t$) is a result of the optimization that characterizes at least a local minimum of the loss function. The loss function comprises a first term characterizing a negative total variation of an attention map of the cross-attention. Preferably, the text embedding comprises embeddings for a plurality of subjects comprised in the description, wherein a negative total variation is determined for each attention map corresponding to a subject from the plurality of subjects and wherein the first term characterizes a minimal negative total variation among determined negative total variations. In other words, based on the inputs of the cross-attention layer ($CA_t$) an attention map is determined, wherein the optimized input ($o_t$) is chosen such that the loss function is minimized (at least locally minimized). This is preferably achieved by means of a gradient descent method iteratively determined, wherein in each iteration an intermediate result for the optimized input ($o_t$) is determined, wherein the attention map is then determined using this intermediate result as input. The interactive nature of this preferred variant is depicted by dashed arrows in the figure.

The first term characterizing a negative total variation may especially be understood as the first term a total variation of the attention map that is multiplied by -1. In particular, the attention map may comprise probabilities for each position in the attention map for a plurality or all vectors comprised by the optimized text embedding. The text description may be annotated with respect to which words or tokens in the description of the image ($x_i$) to be generated constitute subjects, i.e., visual concepts such as objects that shall be depicted in the image ($x_i$). The annotation may be provided by a user of the neural network (70) or an automatic procedure such as a part-of-speech tagging method. By means of the one-to-one relationship of the text embedding ($\tau_\theta$), each attention map can also be assigned to a specific word or token in the text description, as an attention map may especially be determined for each vector comprised by the text embedding ($\tau_\theta$). The first term may then characterize a minimum negative total variation among some or all attention maps corresponding to subjects of the text description.

The first term may especially be characterized by the formula

$$\mathcal{L}_{TV} = \min_{s \in S} - \sum_{i,j} |A_t[i+1,j,s] - A_t[i,j,s]| + |A_t[i,j+1,s] - A_t[i,j,s]|,$$

wherein $A_t$ is the attention map and the expression $A_t[i,j,s]$ characterizes the attention map at position $i, j$ for the embedding $s$ of the plurality of subjects S comprised by the description of the image ($x_i$).

After determining the optimized input ($o_t$) in the optimization procedure ($Opt_t$), the cross-attention layer ($CA_t$) may then determine its output based on the optimized input ($o_t$) and the text embedding ($\tau_\theta$). The output may be provided to other blocks (e.g., sequences of layers) of the neural network (70). The output may also be provided to an optional decoder (71) that decodes the determined output into the space of the generated image ($x_i$) as is common for stable diffusion models. For other models (e.g., normalizing flows), the output may already be in the space of the generated image ($x_i$) and may thus not require the decoder (71), i.e., the output may be the generated image ($x_i$, e.g., for normalizing flow models).

Preferably, the output of the cross-attention layer ($CA_t$) is provided as input to one or multiple further layers of the neural network (70). The one or multiple further layers may especially characterize transformer blocks. The further layers may especially also comprise further cross-attention layers ($CA_{t-1}, CA_1$), wherein for each of the further cross-attention layers ($CA_{t-1}, CA_1$) an optimized input ($o_{t-1}, o_1$) may be determined as for the first cross-attention layer ($CA_t$). In other words, if the neural network (70) comprises a plurality of cross-attention layers ($CA_t, CA_{t-1}, CA_1$), an optimized input ($o_t, o_{t-1}, o_1$) may be determined for each cross-attention layer ($CA_t, CA_{t-1}, CA_1$) individually. The optimized inputs ($o_t, o_{t-1}, o_1$) may especially be determined sequentially, i.e., a corresponding optimization procedure ($Opt_t, Opt_{t-1}, Opt_1$) may be executed once input to the respective cross-attention layer ($CA_t, CA_{t-1}, CA_1$) is available. Each optimization procedure ($Opt_t, Opt_{t-1}, Opt_1$) may execute an individual optimization using the loss function as described above.

The generated image ($x_i$) can especially be understood as suitable for use in training or testing another machine learning system. The image ($x_i$) may hence be provided to a database ($St_2$) for use in training or testing. Preferably, the image ($x_i$) may be annotated by a label characterizing objects or other content of the image, wherein the label may then be provided in the database ($St_2$) as a label corresponding to the image ($x_i$).

The label may characterize a main class of the image ($x_i$), multiple different attribute classifications of the image ($x_i$), bounding boxes characterizing objects in the image ($x_i$), classes of objects in the image ($x_i$), semantic segmentations of the image ($x_i$)

Preferably, the text description may comprise a subject and an attribute, wherein the attribute describes the subject. The attribute may, for example, be an adjective describing the subject (e.g., a green dog). The loss function may then comprise a second term, wherein the second term characterizes a difference between an attention map of the cross-attention corresponding to the subject and an attention map of the cross-attention corresponding to the attribute. The second term may especially characterize a Jensen-Shannon-divergence between the attention map determined for the attribute and the attention map determined for the subject.

In particular, the second term may be characterized by the formula:

$$\mathcal{L}_{bind} = JSD(A[:,:,r] \,||\, A[:,:,s]),$$

wherein $A[:,:,r]$ characterizes the matrix of attention values for the attribute comprised by the attention map and $A[:,:,s]$

characterizes the matrix of attention values for the subject comprised by the attention map.

The connection which attribute connects to which subject may be provided by a user or by means of part-of-speech tagging.

Preferably, wherein the text embedding comprises a spatial relation connecting a first subject and a second subject and the loss function further comprises a third term characterizing a difference of a first index of an attention map corresponding to the first subject and a second index of an attention map corresponding to the second subject, wherein the first index characterizes a maximum value of the attention map corresponding to the first subject, the second index characterizes a maximum value of the attention map corresponding to the second subject, and wherein whether the first index is subtracted from the second index or the second index is subtracted from the first index is determined based on the spatial relation.

The spatial relation may especially be any one from the list "left of", "right of", "below", or "above". In the method, the first index may be determined by determined a largest value of the attention map corresponding to the first subject, and using a position of the largest value along the height and/or width dimension of the attention map as first index. The second index may be determined by determined a largest value of the attention map corresponding to the second subject, and using a position of the largest value along the height and/or width dimension of the attention map as second index. The third term may be characterized by the formula:

$$\mathcal{L}_{spatial} = \begin{cases} x_1 - x_2, & \text{if } s_1 \text{ is to the left of } s_2 \\ x_2 - x_1, & \text{if } s_1 \text{ is to the right of } s_2 \\ y_1 - y_2, & \text{if } s_1 \text{ is below } s_2 \\ y_2 - y_1, & \text{if } s_1 \text{ is above } s_2 \end{cases},$$

wherein $x_1$ is a first index along a width dimension of the attention map.

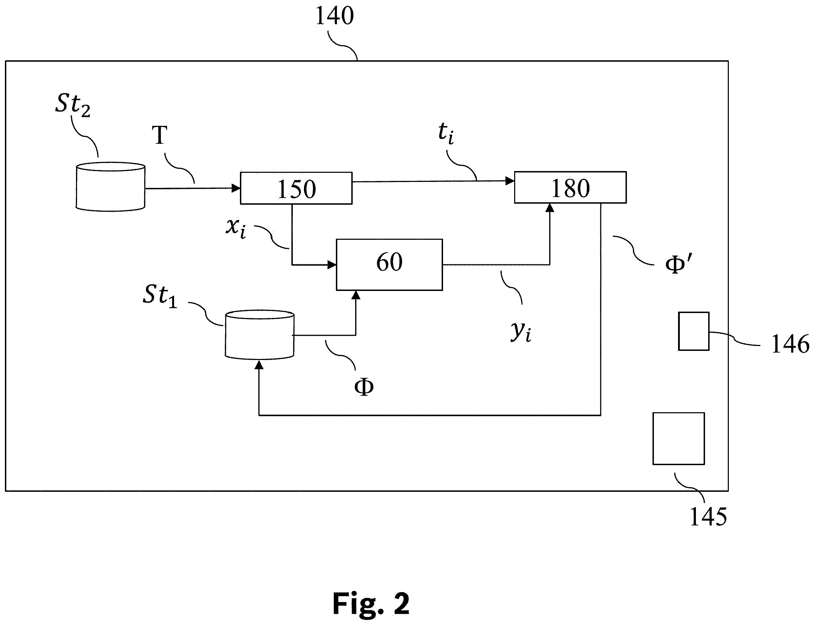

Figure 2 shows an embodiment of a training system (140) for training a machine learning system (60) of a training data set (T) comprising the generated image ($x_i$). The training data set (T) preferably comprises a plurality of images ($x_i$), e.g., wherein each image has been generated based on a differently randomly drawn image ($z_t$) and/or a different text description. The plurality of images ($x_i$) are used for training the machine learning system (60), wherein the training data set (T) preferably further comprises, for each image ($x_i$), a desired output signal ($t_i$) which corresponds to the image ($x_i$) and characterizes a desired classification of the image ($x_i$) or a desired regression value, i.e., real value. The machine learning system (60) may hence be understood as image classification system or image regressor system. The machine learning system (60) may especially be given in the form of a neural network such as a convolutional neural network, a vision transformer, or a visual transformer.

For training, a training data unit (150) accesses a computer-implemented database ($St_2$), the database ($St_2$) providing the training data set (T). The training data unit (150) determines from the training data set (T) preferably randomly at least one image ($x_i$) and the desired output signal ($t_i$) corresponding to the image ($x_i$) and transmits the image ($x_i$) to the machine learning system (60). The machine learning system (60) determines an output signal ($y_i$) based on the image ($x_i$).

The desired output signal ($t_i$) and the determined output signal ($y_i$) are transmitted to a modification unit (180).

Based on the desired output signal ($t_i$) and the determined output signal ($y_i$), the modification unit (180) then determines new parameters ($\Phi'$) for the machine learning system (60). For this purpose, the modification unit (180) compares the desired output signal ($t_i$) and the determined output signal ($y_i$) using a loss function. The loss function determines a first loss value that characterizes how far the determined output signal ($y_i$) deviates from the desired output signal ($t_i$). In the given embodiment, a negative log-likelihood function is used as the loss function. Other loss functions are also conceivable in alternative embodiments.

Furthermore, it is conceivable that the determined output signal ($y_i$) and the desired output signal ($t_i$) each comprise a plurality of sub-signals, for example in the form of tensors, wherein a sub-signal of the desired output signal ($t_i$) corresponds to a sub-signal of the determined output signal ($y_i$). It is conceivable, for example, that the machine learning system (60) is configured for object detection and a first sub-signal characterizes a probability of occurrence of an object with respect to a part of the image ($x_i$) and a second sub-signal characterizes the exact position of the object. If the determined output signal ($y_i$) and the desired output signal ($t_i$) comprise a plurality of corresponding sub-signals, a second loss value is preferably determined for each corresponding sub-signal by means of a suitable loss function and the determined second loss values are suitably combined to form the first loss value, for example by means of a weighted sum.

The modification unit (180) determines the new parameters ($\Phi'$) based on the first loss value. In the given embodiment, this is done using a gradient descent method, preferably stochastic gradient descent, Adam, or AdamW. In further embodiments, training may also be based on an evolutionary algorithm or a second-order method for training neural networks.

In other preferred embodiments, the described training is repeated iteratively for a predefined number of iteration steps or repeated iteratively until the first loss value falls below a predefined threshold value. Alternatively or additionally, it is also conceivable that the training is terminated when an average first loss value with respect to a test or validation data set falls below a predefined threshold value. In at least one of the iterations the new parameters ($\Phi'$) determined in a previous iteration are used as parameters ($\Phi$) of the machine learning system (60).

Furthermore, the training system (140) may comprise at least one processor (145) and at least one machine-readable storage medium (146) containing instructions which, when executed by the processor (145), cause the training system (140) to execute a training method according to one of the aspects of the invention.

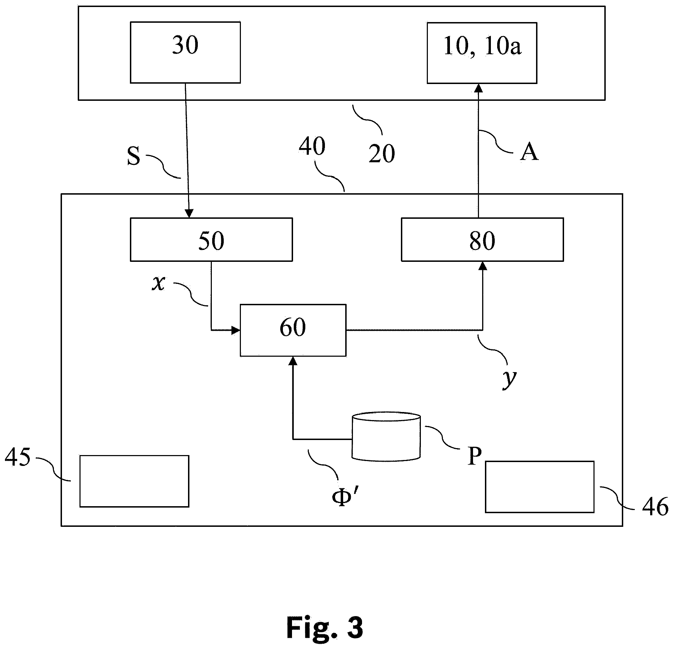

Figure 3 shows an embodiment of a control system (40) controlling an actuator (10) in its environment (20) based on an output of the machine learning system (60). The actuator (10) and its environment (20) will be jointly called actuator system. At preferably evenly spaced points in time, a sensor (30) senses a condition of the actuator system. The sensor (30) may comprise several sensors. Preferably, the sensor (30) is an optical sensor that takes images of the environment (20). An output signal (S) of the sensor (30) (or, in case the sensor (30) comprises a plurality of sensors, an output signal (S) for each of the sensors) which encodes the sensed condition is transmitted to the control system (40).

Thereby, the control system (40) receives a stream of sensor signals (S). It then computes a series of control signals (A) depending on the stream of sensor signals (S), which are then transmitted to the actuator (10).

The control system (40) receives the stream of sensor signals (S) of the sensor (30) in an optional receiving unit (50). The receiving unit (50) transforms the sensor signals (S) into images (x). Alternatively, in case of no receiving unit (50), each sensor signal (S) may directly be taken as a image (x). The image (x) may, for example, be given as an excerpt from the sensor signal (S). Alternatively, the sensor signal (S) may be processed to yield the image (x), e.g., by means of preprocessing the sensor signal to determine the image (x). In other words, the image (x) is provided in accordance with the sensor signal (S).

The image (x) is then passed on to the machine learning system (60).

The machine learning system (60) is parametrized by parameters ($\Phi$), which are stored in and provided by a parameter storage ($St_1$).

The machine learning system (60) determines an output signal (y) from the image (x). The output signal (y) comprises information that assign one or more labels to the image (x). The output signal (y) is transmitted to an optional conversion unit (80), which converts the output signal (y) into the control signals (A). The control signals (A) are then transmitted to the actuator (10) for controlling the actuator (10) accordingly. Alternatively, the output signal (y) may directly be taken as control signal (A).

The actuator (10) receives control signals (A), is controlled accordingly and carries out an action corresponding to the control signal (A). The actuator (10) may comprise a control logic which transforms the control signal (A) into a further control signal, which is then used to control actuator (10).

In further embodiments, the control system (40) may comprise the sensor (30). In even further embodiments, the control system (40) alternatively or additionally may comprise an actuator (10).

In still further embodiments, it can be envisioned that the control system (40) controls a display (10a) instead of or in addition to the actuator (10).

Furthermore, the control system (40) may comprise at least one processor (45) and at least one machine-readable storage medium (46) on which instructions are stored which, if carried out, cause the control system (40) to carry out a method according to an aspect of the invention.

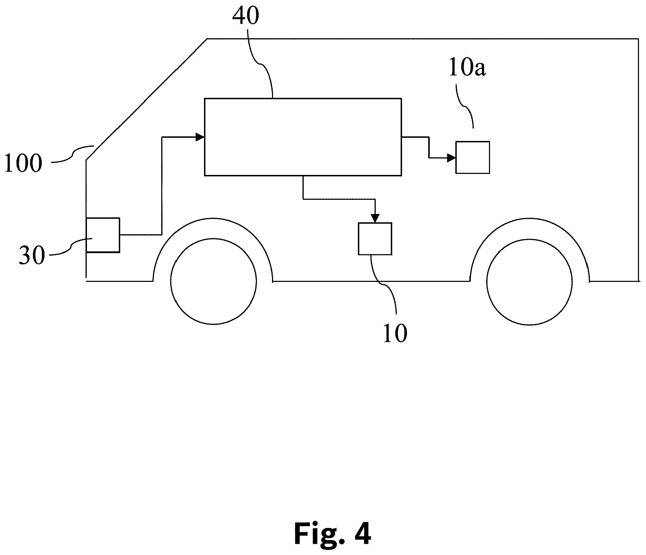

Figure 4 shows an embodiment in which the control system (40) is used to control an at least partially autonomous robot, e.g., an at least partially autonomous vehicle (100).

The sensor (30) may comprise one or more video sensors and/or one or more radar sensors and/or one or more ultrasonic sensors and/or one or more LiDAR sensors. Some or all of these sensors are preferably but not necessarily integrated in the vehicle (100).

The machine learning system (60) may be configured to detect objects in the vicinity of the at least partially autonomous robot based on the input image (x). The output signal (y) may comprise an information, which characterizes where objects are located in the vicinity of the at least partially autonomous robot. The control signal (A) may then be determined in accordance with this information, for example to avoid collisions with the detected objects.

The actuator (10), which is preferably integrated in the vehicle (100), may be given by a brake, a propulsion system, an engine, a drivetrain, or a steering of the vehicle (100). The control signal (A) may be determined such that the actuator (10) is controlled such that vehicle (100) avoids collisions with the detected objects. The detected objects may also be classified according to what the machine learning system (60) deems them most likely to be, e.g., pedestrians or trees, and the control signal (A) may be determined depending on the classification.

Alternatively or additionally, the control signal (A) may also be used to control the display (10a), e.g., for displaying the objects detected by the machine learning system (60). It can also be imagined that the control signal (A) may control the display (10a) such that it produces a warning signal if the vehicle (100) is close to colliding with at least one of the detected objects. The warning signal may be a warning sound and/or a haptic signal, e.g., a vibration of a steering wheel of the vehicle.

In further embodiments, the at least partially autonomous robot may be given by another mobile robot (not shown), which may, for example, move by flying, swimming, diving or stepping. The mobile robot may, inter alia, be an at least partially autonomous lawn mower, or an at least partially autonomous cleaning robot. In all of the above embodiments, the control signal (A) may be determined such that propulsion unit and/or steering and/or brake of the mobile robot are controlled such that the mobile robot may avoid collisions with said identified objects.

In a further embodiment, the at least partially autonomous robot may be given by a gardening robot (not shown), which uses the sensor (30), preferably an optical sensor, to determine a state of plants in the environment (20). The actuator (10) may control a nozzle for spraying liquids and/or a cutting device, e.g., a blade. Depending on an identified species and/or an identified state of the plants, an control signal (A) may be determined to cause the actuator (10) to spray the plants with a suitable quantity of suitable liquids and/or cut the plants.

In even further embodiments, the at least partially autonomous robot may be given by a domestic appliance (not shown), like e.g. a washing machine, a stove, an oven, a microwave, or a dishwasher. The sensor (30), e.g., an optical sensor, may detect a state of an object which is to undergo processing by the household appliance. For example, in the case of the domestic appliance being a washing machine, the sensor (30) may detect a state of the laundry inside the washing machine. The control signal (A) may then be determined depending on a detected material of the laundry.

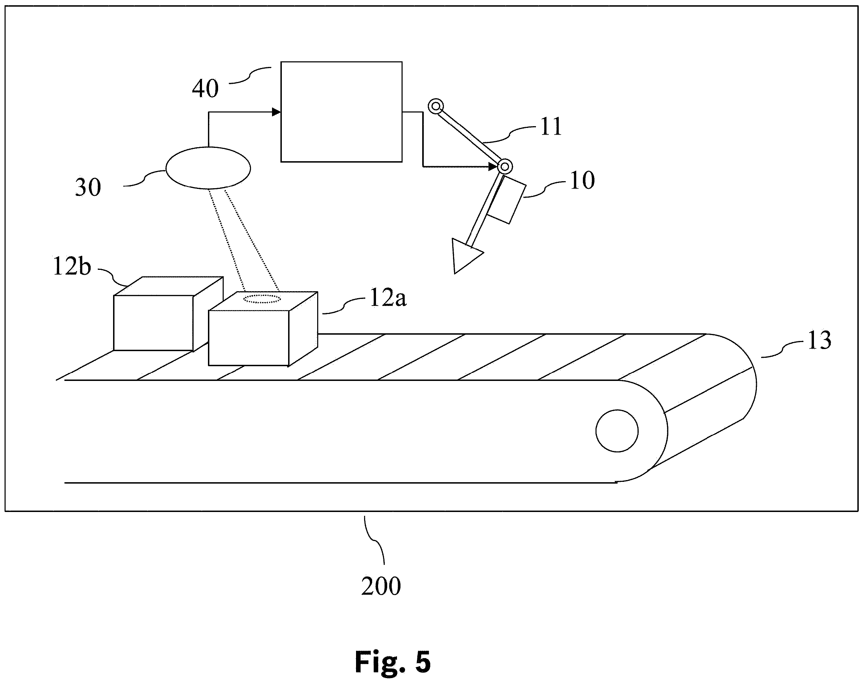

Figure 5 shows an embodiment in which the control system (40) is used to control a manufacturing machine (11), e.g., a punch cutter, a cutter, a gun drill or a gripper, of a manufacturing system (200), e.g., as part of a production line. The manufacturing machine may comprise a transportation device, e.g., a conveyer belt or an assembly line, which moves a manufactured product (12). The control system (40) controls an actuator (10), which in turn controls the manufacturing machine (11).

The sensor (30) may be given by an optical sensor which captures properties of, e.g., a manufactured product (12).

The machine learning system (60) may determine a position of the manufactured product (12) with respect to the transportation device. The actuator (10) may then be controlled depending on the determined position of the manufactured product (12) for a subsequent manufacturing step of the manufactured product (12). For example, the actuator (10) may be controlled to cut the manufactured product at a specific location of the manufactured product itself. Alternatively, it may be envisioned that the machine learning system (60) classifies, whether the manufactured product is broken and/or exhibits a defect. The actuator (10) may then be controlled as to remove the manufactured product from the transportation device.

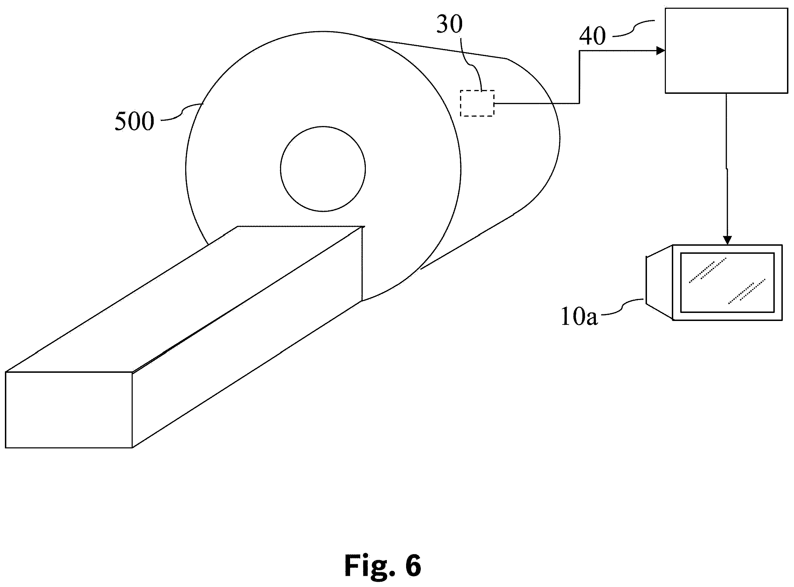

Figure 6 shows an embodiment of a medical imaging system (500) controlled by the control system (40). The imaging system may, for example, be an MRI apparatus, x-ray imaging apparatus or ultrasonic imaging apparatus. The sensor (30) may, for example, be an imaging sensor which takes at least one image of a patient, e.g., displaying different types of body tissue of the patient.

The machine learning system (60) may then determine a classification of at least a part of the sensed image. The at least part of the image is hence used as input image (x) to the machine learning system (60).

The control signal (A) may then be chosen in accordance with the classification, thereby controlling a display (10a). For example, the machine learning system (60) may be configured to detect different types of tissue in the sensed image, e.g., by classifying the tissue displayed in the image into either malignant or benign tissue. This may be done by means of a semantic segmentation of the input image (x) by the machine learning system (60). The control signal (A) may then be determined to cause the display (10a) to display different tissues, e.g., by displaying the input image (x) and coloring different regions of identical tissue types in a same color.

In further embodiments (not shown) the imaging system (500) may be used for non-medical purposes, e.g., to determine material properties of a workpiece. In these embodiments, the machine learning system (60) may be configured to receive an input image (x) of at least a part of the workpiece and perform a semantic segmentation of the input image (x), thereby classifying the material properties of the workpiece. The control signal (A) may then be determined to cause the display (10a) to display the input image (x) as well as information about the detected material properties.

The term "computer" may be understood as covering any devices for the processing of pre-defined calculation rules. These calculation rules can be in the form of software, hardware or a mixture of software and hardware.

In general, a plurality can be understood to be indexed, that is, each element of the plurality is assigned a unique index, preferably by assigning consecutive integers to the elements contained in the plurality. Preferably, if a plurality comprises $N$ elements, wherein $N$ is the number of elements in the plurality, the elements are assigned the integers from 1 to $N$. It may also be understood that elements of the plurality can be accessed by their index.

**Claims**

1.  Computer-implemented method for generating an image ($x_i$), wherein the image ($x_i$) is generated by a neural network (70) and wherein the method comprises the steps of:

    • Providing a randomly drawn image ($z_t$) or a representation ($z_{t-1}$, $z_1$) of the randomly drawn image ($z_t$) as input of a

sequence of layers ($s_t$, $s_{t-1}$, $s_1$) of the neural network (70), wherein the sequence of layers comprises at least one cross-attention layer ($CA_t$, $CA_{t-1}$, $CA_1$);
• Providing a first input to the cross-attention layer ($CA_t$, $CA_{t-1}$, $CA_1$), wherein the first input is either a representation of the input of the sequence of layers determined by layers of the sequence of layers preceding the cross-attention layer or

> wherein the first input is the input to the sequence of layers and
> providing a text embedding ($\tau_\theta$) characterizing a description of the image ($x_i$) to be generated as a second input to the cross-attention layer ($CA_t$, $CA_{t-1}$, $CA_1$);

• Determining, by the cross-attention layer, an attention map based on the first input and the second input;
• Optimizing the input provided to the sequence of layers ($s_t$, $s_{t-1}$, $s_1$) based on a loss function thereby determining an optimized input ($o_t$, $o_{t-1}$, $o_1$), wherein the method is **characterized in that** the loss function comprises a term characterizing a negative total variation of the attention map;
• Determining an output of the sequence of layers ($s_t$, $s_{t-1}$, $s_1$) based on the optimized input ($o_t$, $o_{t-1}$, $o_1$);
• Determining the image ($x_i$) based on the determined output of the sequence of layers ($s_t$, $s_{t-1}$, $s_1$).

**2.** Method according to claim 1, wherein the text embedding ($\tau_\theta$) comprises embeddings for a plurality of subjects comprised in the description and an attention map ($CA_t$, $CA_{t-1}$, $CA_1$) is determined for each subject of the plurality of subjects by the cross-attention layer ($CA_t$, $CA_{t-1}$, $CA_1$) and

> a negative total variation is determined for each attention map corresponding to a subject from the plurality of subjects and
> wherein the first term characterizes a minimal negative total variation among the determined negative total variations.

**3.** Method according to claim 1 or 2, wherein the first term is **characterized by** the formula:

$$\mathcal{L}_{TV} = \min_{s \in S} - \sum_{i,j} |A_t[i+1,j,s] - A_t[i,j,s]| + |A_t[i,j+1,s] - A_t[i,j,s]|,$$

wherein $A_t$ is the attention map and the expression $A_t[i, j, s]$ characterizes the attention map at position $i, j$ for the embedding $s$ of a set of subjects $S$ comprised by the description.

**4.** Method according to any one of the claims 1 to 3, wherein the text embedding ($\tau_\theta$) comprises an embedding for a subject comprised by the description and an embedding for an attribute comprised by the description and describing the subject and wherein the method further comprises the steps of:

> • Determining, by the cross-attention layer, a first attention map for the attribute and a second attention map for the subject;
> • Optimizing the input provided to the sequence of layers ($s_t$, $s_{t-1}$, $s_1$) based on the loss function wherein the loss function comprises a second term, wherein the second term characterizes a difference between the first attention map and the second attention map.

**5.** Method according to claim 4, wherein the difference is a Jensen-Shannon divergence.

**6.** Method according to any one of the previous claims, wherein the text description comprises a spatial relation connecting a first subject and a second subject of the text description and wherein the method further comprises the steps of:

> • Determining, by the cross-attention layer, a third attention map corresponding to the first subject and a fourth attention map corresponding to the second subject;
> • Determining a first index corresponding to a position in the third attention map that has a largest value within the third attention map;
> • Determining a second index corresponding to a position in the fourth attention map that has a largest value within the fourth attention map;

• Optimizing the input provided to the sequence of layers ($s_t$, $s_{t-1}$, $s_1$) based on the loss function, wherein the loss function a third term characterizing a difference of the first index and the second index wherein whether the first index is subtracted from the second index or the second index is subtracted from the first index is determined based on the spatial relation.

7. Method according to any one of the previous claims, where the optimized input ($o_t$, $o_{t-1}$, $o_1$) is determined by minimizing the loss function using a gradient descent method.

8. Method according to any one of the previous claims, wherein the neural network (70) is a latent diffusion model, preferably a stable diffusion model, or a normalizing flow.

9. Computer implemented method for training or testing an image classification system and/or image regression system (60) comprising the steps of:

• Generating an image ($x_i$) according to the method of any one of the previous claims;
• Training or testing the image classification system and/or image regression system (60) using the generated image ($x_i$).

10. Computer implemented method for determining a control signal (A) of an actuator (10) and/or a display (10a) based on an output ($y$) of a machine learning system (60), wherein the machine learning system (60) has been trained with a method according to claim 9.

11. Training system (140), which is configured to carry out the training method according to claim 9.

12. Control system (40), which is configured to carry out the method according to claim 10.

13. Computer program that is configured to cause a computer to carry out the method according to any one of the claims 1 to 10 with all of its steps if the computer program is carried out by a processor (45, 145).

14. Machine-readable storage medium (46, 146) on which the computer program according to claim 13 is stored.

**Amended claims in accordance with Rule 137(2) EPC.**

1. Computer-implemented method for generating an image ($x_i$), wherein the image ($x_i$) is generated by a neural network (70) and wherein the method comprises the steps of:

a. Providing a randomly drawn image ($z_t$) or a representation ($z_{t-1}$, $z_1$) of the randomly drawn image ($z_t$) as input of a sequence of layers ($s_t$, $s_{t-1}$, $s_1$) of the neural network (70), wherein the sequence of layers comprises at least one cross-attention layer ($CA_t$, $CA_{t-1}$, $CA_1$);
b. Providing a first input to the cross-attention layer ($CA_t$, $CA_{t-1}$, $CA_1$), wherein the first input is either a representation of the input of the sequence of layers determined by layers of the sequence of layers preceding the cross-attention layer or
wherein the first input is the input to the sequence of layers and providing a text embedding ($\tau_\theta$) characterizing a description of the image ($x_i$) to be generated as a second input to the cross-attention layer ($CA_t$, $CA_{t-1}$, $CA_1$), wherein the description comprises a spatial relation connecting a first subject and a second subject of the description and wherein the method further comprises the steps of;
c. Determining, by the cross-attention layer, an attention map based on the first input and the second input;
d. Determining, by the cross-attention layer, a third attention map corresponding to the first subject and a fourth attention map corresponding to the second subject;
e. Determining a first index corresponding to a position in the third attention map that has a largest value within the third attention map;
f. Determining a second index corresponding to a position in the fourth attention map that has a largest value within the fourth attention map;
g. Optimizing the input provided to the sequence of layers ($s_t$, $s_{t-1}$, $s_1$) based on a loss function thereby determining an optimized input ($o_t$, $o_{t-1}$, $o_1$), wherein the method is **characterized in that** the loss function comprises a first term characterizing a negative total variation of the attention map and wherein the loss function comprises a third term characterizing a difference of the first index and the second index;
h. Determining an output of the sequence of layers ($s_t$, $s_{t-1}$, $s_1$) based on the optimized input ($o_t$, $o_{t-1}$, $o_1$);

i. Determining the image ($x_i$) based on the determined output of the sequence of layers ($s_t$, $s_{t-1}$, $s_1$).

2. Method according to claim 1, wherein the text embedding ($\tau_\theta$) comprises embeddings for a plurality of subjects comprised in the description and

   an attention map ($CA_t$, $CA_{t-1}$, $CA_1$) is determined for each subject of the plurality of subjects by the cross-attention layer ($CA_t$, $CA_{t-1}$, $CA_1$) and
   a negative total variation is determined for each attention map corresponding to a subject from the plurality of subjects and
   wherein the first term characterizes a minimal negative total variation among the determined negative total variations.

3. Method according to claim 1 or 2, wherein the first term is **characterized by** the formula:

$$\mathcal{L}_{TV} = \min_{s \in S} - \sum_{i,j} \big| A_t[i+1, j, s] - A_t[i, j, s] \big| + \big| A_t[i, j+1, s] - A_t[i, j, s] \big|,$$

   wherein $A_t$ is the attention map and the expression $A_t[i,j,s]$ characterizes the attention map at position i, j for the embedding s of a set of subjects S comprised by the description.

4. Method according to any one of the claims 1 to 3, wherein the text embedding ($\tau_\theta$) comprises an embedding for a subject comprised by the description and an embedding for an attribute comprised by the description and describing the subject and wherein the method further comprises the steps of:

   a. Determining, by the cross-attention layer, a first attention map for the attribute and a second attention map for the subject;
   b. Optimizing the input provided to the sequence of layers ($s_t$, $s_{t-1}$, $s_1$) based on the loss function wherein the loss function comprises a second term, wherein the second term characterizes a difference between the first attention map and the second attention map.

5. Method according to claim 4, wherein the difference is a Jensen-Shannon divergence.

   a.

6. Method according to any one of the previous claims, where the optimized input ($o_t$, $o_{t-1}$, $o_1$) is determined by minimizing the loss function using a gradient descent method.

7. Method according to any one of the previous claims, wherein the neural network (70) is a latent diffusion model, preferably a stable diffusion model, or a normalizing flow.

8. Computer implemented method for training or testing an image classification system and/or image regression system (60) comprising the steps of:

   a. Generating an image ($x_i$) according to the method of any one of the previous claims;
   b. Training or testing the image classification system and/or image regression system (60) using the generated image ($x_i$).

9. Computer implemented method for determining a control signal (A) of an actuator (10) and/or a display (10a) based on an output (y) of a machine learning system (60), wherein the machine learning system (60) has been trained with a method according to claim 9.

10. Training system (140), which is configured to carry out the training method according to claim 8.

11. Control system (40), which is configured to carry out the method according to claim 9.

12. Computer program that is configured to cause a computer to carry out the method according to any one of the claims 1 to 9 with all of its steps if the computer program is carried out by a processor (45, 145).

**13.** Machine-readable storage medium (46, 146) on which the computer program according to claim 12 is stored.

Fig. 1

**Fig. 2**

EP 4 492 285 A1

**Fig. 3**

EP 4 492 285 A1

**Fig. 4**

**Fig. 5**

EP 4 492 285 A1

**Fig. 6**

EP 4 492 285 A1

Europäisches
Patentamt

European
Patent Office

Office européen
des brevets

# EUROPEAN SEARCH REPORT

Application Number

EP 23 18 4415

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | HILA CHEFER ET AL: "Attend-and-Excite: Attention-Based Semantic Guidance for Text-to-Image Diffusion Models", ARXIV.ORG, CORNELL UNIVERSITY LIBRARY, 201 OLIN LIBRARY CORNELL UNIVERSITY ITHACA, NY 14853, 31 May 2023 (2023-05-31), XP091523718, | 1-3,7,8 | INV.<br>G06N3/045<br>G06N3/084<br>G06V10/82<br>G06N3/0475 |
| Y | * abstract * | 4,5,9,11 | |
| A | * Sections 1, 3-5 * | 6 | |
| X | GIOVANNI MARIANI ET AL: "BAGAN: Data Augmentation with Balancing GAN", ARXIV.ORG, CORNELL UNIVERSITY LIBRARY, 201 OLIN LIBRARY CORNELL UNIVERSITY ITHACA, NY 14853, 26 March 2018 (2018-03-26), XP081236504, | 10,12-14 | |
| Y | * figure 9 *<br>* Section 5.2 * | 9,11 | |
| Y | ROYI RASSIN ET AL: "Linguistic Binding in Diffusion Models: Enhancing Attribute Correspondence through Attention Map Alignment", ARXIV.ORG, CORNELL UNIVERSITY LIBRARY, 201 OLIN LIBRARY CORNELL UNIVERSITY ITHACA, NY 14853, 15 June 2023 (2023-06-15), XP091538602, | 4,5 | TECHNICAL FIELDS SEARCHED (IPC)<br><br>G06N<br>G06V |
| A | * abstract *<br>* Sections 1-4 * | 1-3,6-8 | |
| | -/-- | | |

The present search report has been drawn up for all claims

| Place of search | Date of completion of the search | Examiner |
|---|---|---|
| The Hague | 15 January 2024 | Mariani, Giovanni |

EPO FORM 1503 03.82 (P04C01)

**page 1 of 2**

Europäisches
Patentamt

European
Patent Office

Office européen
des brevets

## EUROPEAN SEARCH REPORT

Application Number

EP 23 18 4415

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | QUYNH PHUNG ET AL: "Grounded Text-to-Image Synthesis with Attention Refocusing", ARXIV.ORG, CORNELL UNIVERSITY LIBRARY, 201 OLIN LIBRARY CORNELL UNIVERSITY ITHACA, NY 14853, 8 June 2023 (2023-06-08), XP091533468, * abstract * * figures 1, 3, 5-8 * * Sections 1, 3, and 4 * | 1-8 | |
| A | ZHIHENG LIU ET AL: "Cones 2: Customizable Image Synthesis with Multiple Subjects", ARXIV.ORG, CORNELL UNIVERSITY LIBRARY, 201 OLIN LIBRARY CORNELL UNIVERSITY ITHACA, NY 14853, 30 May 2023 (2023-05-30), XP091524360, * abstract * * Sections 1, 3, and 4; figures 2, 5 * | 1-8 | |
| A | RUICHEN WANG ET AL: "Compositional Text-to-Image Synthesis with Attention Map Control of Diffusion Models", ARXIV.ORG, CORNELL UNIVERSITY LIBRARY, 201 OLIN LIBRARY CORNELL UNIVERSITY ITHACA, NY 14853, 23 May 2023 (2023-05-23), XP091516208, * abstract * * Sections 1, 3, and 4 * * figure 2 * | 1-8 | **TECHNICAL FIELDS SEARCHED** (IPC) |

The present search report has been drawn up for all claims

| Place of search | Date of completion of the search | Examiner |
|---|---|---|
| The Hague | 15 January 2024 | Mariani, Giovanni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHEFER et al.** *Attend-and-Excite: Attention-Based Semantic Guidance for Text-to-Image Diffusion Models*, 31 January 2023, https://arxiv.org/abs/2301.13826